(19) **Europäisches Patentamt / European Patent Office / Office européen des brevets**

(11) **EP 4 716 046 A1**

(12) # EUROPEAN PATENT APPLICATION
published in accordance with Art. 153(4) EPC

(43) Date of publication:
**25.03.2026  Bulletin 2026/13**

(21) Application number: **24806821.5**

(22) Date of filing: **30.01.2024**

(51) International Patent Classification (IPC):
**H02J 3/00** (2026.01)     **H02J 13/00** (2026.01)

(52) Cooperative Patent Classification (CPC):
**H02J 3/00; H02J 13/00**

(86) International application number:
**PCT/JP2024/002884**

(87) International publication number:
**WO 2024/236866 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.05.2023   JP 2023081814**

(71) Applicant: **Hitachi, Ltd.**
**Tokyo 100-8280 (JP)**

(72) Inventors:
• **KIRIHARA, Kenta**
  **Tokyo 100-8280 (JP)**
• **ITAI, Jun**
  **Tokyo 100-8280 (JP)**

• **IMAI, Hidetaka**
  **Tokyo 100-8280 (JP)**
• **KURODA, Eisuke**
  **Tokyo 100-8280 (JP)**
• **YAMAZAKI, Jun**
  **Tokyo 100-8280 (JP)**
• **YATSU, Masahiro**
  **Tokyo 100-8280 (JP)**
• **TANSO, Hiroshi**
  **Tokyo 100-8280 (JP)**
• **UENO, Shintaro**
  **Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(54) **POWER SYSTEM STABILIZING SYSTEM AND POWER SYSTEM STABILIZING METHOD**

(57)    There is provided a power system stabilization system and the like capable of achieving stabilization of a power system even when the scale of the power system is large. This include a processing unit configured to generate a constraint condition list which is a list of constraint conditions for performing preventive control on a power system, based on a power system model which is a model of the power system, a power system state which indicates a state of the power system, and an event list which is a list of events assumed in the power system. The processing unit is configured to display, by a display unit (16), information including a constraint screening parameter which serves as a criterion for whether to perform screening of the constraint conditions, and a screened constraint list which is a list of screened constraint conditions.

EP 4 716 046 A1

## FIG. 4

POWER SYSTEM STABILIZATION DEVICE ~10

POWER SYSTEM STATE DB ~42

POWER SYSTEM MODEL DB ~41

EVENT LIST DB ~43

CONSTRAINT CONDITION CONSTRUCTION UNIT ~46

CONSTRAINT SCREENING PARAMETER DB ~44

CONSTRAINT SCREENING UNIT ~47

CONSTRAINT CONDITION LIST DB ~51

SCREENED CONSTRAINT LIST DB ~52

DISPLAY UNIT ~16

COST FUNCTION DB ~45

PREVENTIVE CONTROL CALCULATION UNIT ~48

PREVENTIVE CONTROL DB ~53

PREVENTIVE CONTROL EXECUTION UNIT ~49

PREVENTIVE CONTROL EVALUATION RESULT DB ~54

## Description

### TECHNICAL FIELD

The present disclosure relates to a power system stabilization system and the like.

### BACKGROUND ART

In recent years, power generation facilities for renewable energy, such as solar power generation and wind power generation, have been increasing. In power generation facilities for renewable energy, the generated power fluctuates with changes in weather and wind conditions, which makes overloads more likely occur on the transmission lines of a power system. As a technique for resolving such overloads on transmission lines, a power system stabilization system (SPS: Special Protection Schemes) has been proposed.

Furthermore, as techniques for preventing the chain-reaction propagation of malfunctions in a power system, Preventive Control and Security Constrained Optimal Power Flow (SCOPF) are known. For example, in Preventive Control, the greater the number of combinations of objects to be monitored, such as transmission lines, and the number of assumed fault cases, the greater the number of constraint conditions becomes, resulting in an enormous calculation time. Therefore, as techniques for shortening the calculation time for Preventive Control and the like, for example, the techniques described in Patent Literatures 1 to 3 and Non-Patent Literatures 1 and 2 have been proposed.

Specifically, Patent Literature 1 describes defining SCOPF as a convex optimization problem and using an optimization solver that utilizes a sparse matrix (ADMM: Alternating Direction Method of Multipliers).

Patent Literature 2 describes performing convex relaxation in OPF (optimal power flow) including switching, and further performing partial differentiation to achieve higher speed calculation.

Patent Literature 3 describes achieving higher speed SCOPF through convex relaxation and problem decomposition.

Non-Patent Literature 1 describes reducing the problem size by identifying umbrella constraints in SCOPF and screening out the others.

Non-Patent Literature 2 describes a method for rapidly identifying umbrella constraints in a Unit Commitment Problem (UCP), which is an application of SCOPF.

### CITATION LIST

#### Patent Literature

Patent Literature 1: US 2015/0378384 A1
Patent Literature 2: US8775136B2
Patent Literature 3: WO 2011/112365 A1

#### Non-Patent Literature

Non-Patent Literature 1: A.J. Ardakani and F. Bouffard, "Identification of Umbrella Constraints in DC-Based Security-Constrained Optimal Power Flow," IEEE Transactions on Power Systems, Nov. 2013, vol. 28, no. 4, pp. 3924-3934
Non-Patent Literature 2: A.J. Ardakani and F. Bouffard, "Acceleration of Umbrella Constraint Discovery in Generation Scheduling Problems," IEEE Transactions on Power Systems, July 2015, vol. 30, no. 4, pp. 2100-2109

### SUMMARY OF INVENTION

#### Technical Problem

In the techniques described in Patent Literatures 1 to 3, higher speed calculation is achieved by devising the calculation method for preventive control, but because the problem size is not reduced, the calculation time becomes longer as the scale of the power system increases. Therefore, with the techniques described in Patent Literatures 1 to 3, it becomes difficult, for example, to utilize the processing results of a power system stabilization system online (reflect them in the power system in real time).

In the techniques described in Non-Patent Literatures 1 and 2, higher speed calculation is achieved by identifying and screening unnecessary constraints, but the process of identifying unnecessary constraints is cumbersome, and there is also room for improvement in shortening the calculation time. Generally, the larger the scale of a power system is, the longer the calculation time required for preventive control becomes; therefore, further improvement is required.

Therefore, an object of the present disclosure is to provide a power system stabilization system and the like capable of achieving stabilization of a power system even when the scale of the power system is large.

**Solution to Problem**

In order to solve the aforementioned problem, a power system stabilization system according to the present disclosure includes a processing unit configured to generate a constraint condition list which is a list of constraint conditions for performing preventive control on a power system, based on a power system model which is a model of the power system, a power system state which indicates a state of the power system, and an event list which is a list of events assumed in the power system. The processing unit is configured to display, by a display device, information including a constraint screening parameter which serves as a criterion for whether to perform screening of the constraint conditions, and a screened constraint list which is a list of screened constraint conditions.

**Advantageous Effects of Invention**

According to the present disclosure, there is provided a power system stabilization system and the like capable of achieving stabilization of a power system even when the scale of the power system is large.

**BRIEF DESCRIPTION OF DRAWINGS**

[FIG. 1] FIG. 1 is a configuration diagram showing an example of a power system that is a target of a power system stabilization system according to a first embodiment.
[FIG. 2A] FIG. 2A is an explanatory diagram showing an example of an event in a power system in the power system stabilization system according to the first embodiment, showing a case where the output of a generator increases or decreases.
[FIG. 2B] FIG. 2B is an explanatory diagram showing another example of an event in the power system in the power system stabilization system according to the first embodiment, showing a case where a circuit breaker of a transmission line is opened.
[FIG. 2C] FIG. 2C is an explanatory diagram showing another example of an event in the power system in the power system stabilization system according to the first embodiment, showing a case where the power consumption of a load increases or decreases.
[FIG. 3] FIG. 3 is a diagram showing a hardware configuration of the power system stabilization system according to the first embodiment.
[FIG. 4] FIG. 4 is a functional block diagram of a power system stabilization device included in the power system stabilization system according to the first embodiment.
[FIG. 5] FIG. 5 is an explanatory diagram showing an example of an event case DB of the power system stabilization system according to the first embodiment.
[FIG. 6] FIG. 6 is an explanatory diagram showing an example of a constraint condition list DB of the power system stabilization system according to the first embodiment.
[FIG. 7] FIG. 7 is an explanatory diagram showing an example of a preventive control DB of the power system stabilization system according to the first embodiment.
[FIG. 8] FIG. 8 is an explanatory diagram showing an example of a preventive control evaluation result DB of the power system stabilization system according to the first embodiment.
[FIG. 9] FIG. 9 is a flowchart showing a process executed by a processing unit of the power system stabilization device according to the first embodiment.
[FIG. 10] FIG. 10 is a flowchart related to the screening of constraint conditions in the power system stabilization system according to the first embodiment.
[FIG. 11] FIG. 11 is an explanatory diagram showing an example of a screened constraint list DB of the power system stabilization system according to the first embodiment.
[FIG. 12] FIG. 12 is a simulation result showing an example of the effect of calculation time reduction by screening in the power system stabilization system according to the first embodiment.
[FIG. 13A] FIG. 13A is a simulation result of a comparative example in a case without screening.

[FIG. 13B] FIG. 13B is a simulation result in a case with screening based on the control of the first embodiment.

[FIG. 14] FIG. 14 is a display example of a processing result related to preventive control of the power system stabilization system according to the first embodiment.

[FIG. 15] FIG. 15 is a functional block diagram of a power system stabilization device included in a power system stabilization system according to a second embodiment.

[FIG. 16] FIG. 16 is an explanatory diagram showing an example of a constraint screening parameter evaluation result DB of the power system stabilization system according to the second embodiment.

[FIG. 17] FIG. 17 is a diagram showing an example of a processing result of a constraint screening parameter management unit of the power system stabilization system according to the second embodiment.

## DESCRIPTION OF EMBODIMENTS

<<First Embodiment>>

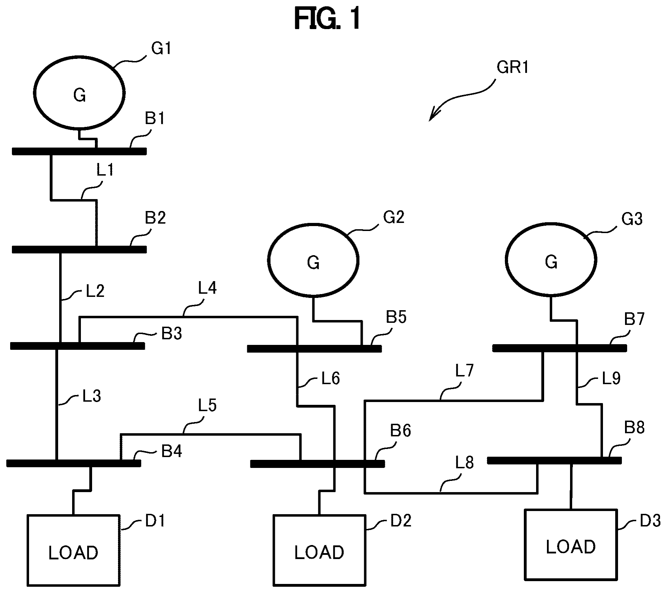

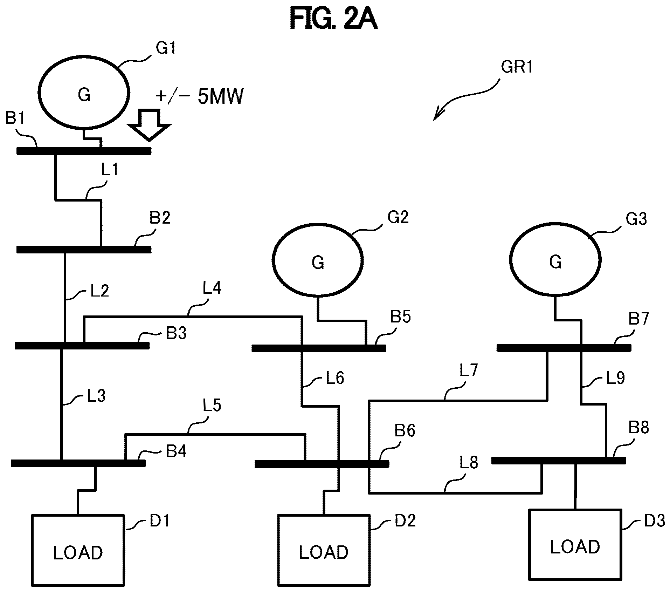

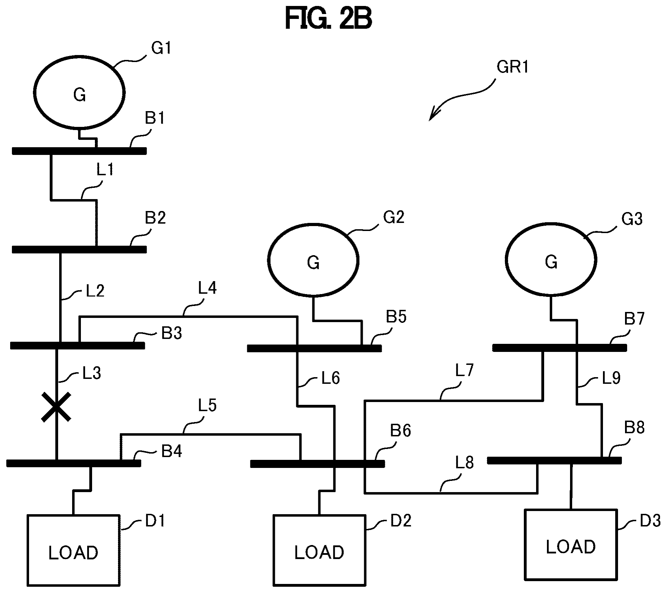

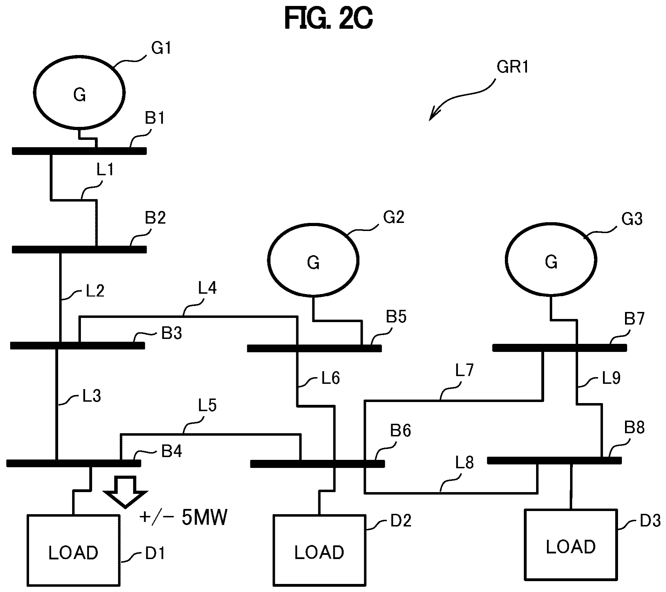

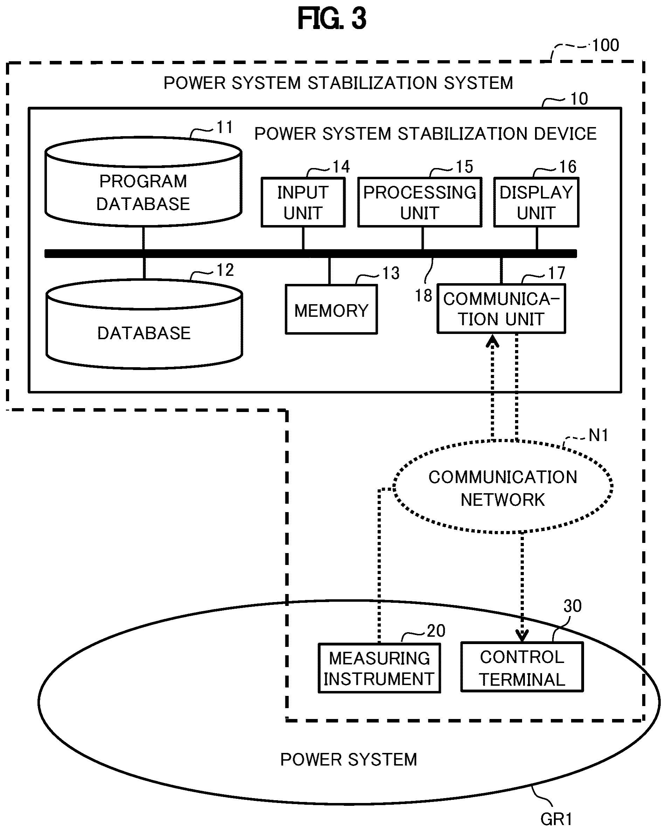

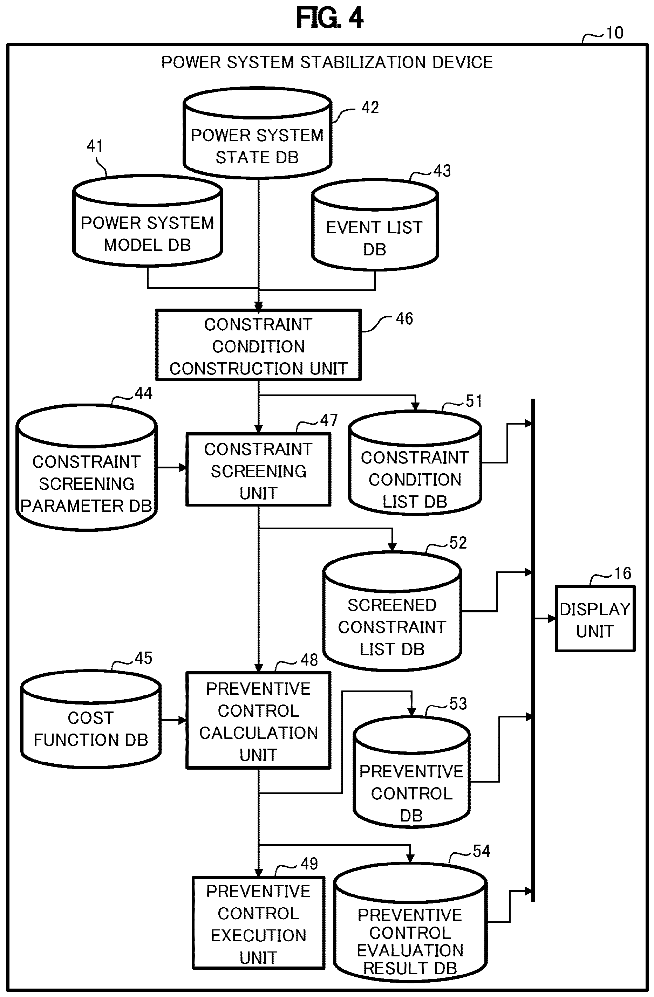

Hereinafter, first, the configuration of a power system GR1 (see FIG. 1) and examples of malfunctions in the power system GR1 (FIG. 2A, FIG. 2B, and FIG. 2C) will be briefly described, and then a power system stabilization system 100 (see FIG. 3 and FIG. 4) will be described in detail.

<Power System Configuration>

FIG. 1 is a configuration diagram showing an example of a power system GR1 that is a target of the power system stabilization system according to the first embodiment.

Note that FIG. 1 simply shows the configuration of the power system GR1. The power system GR1 is a system that supplies the generated power of generators G1 to G3 to loads D1 to D3 via buses B1 to B8 and transmission lines L1 to L9. In the example of FIG. 1, the power system GR1 is configured to include the generators G1 to G3, the buses B1 to B8, and the transmission lines L1 to L9.

The generators G1 to G3 are facilities that perform power generation. Examples of such generators G1 to G3 include facilities that perform solar power generation or wind power generation using renewable energy. Note that the generators G1 to G3 may include generators of facilities that perform thermal power generation or nuclear power generation using non-renewable energy. The buses B1 to B8 are conductors that serve as the main circuits of substations and distribution stations. For example, copper bars, steel bars, or aluminum alloy pipes are used as such buses B1 to B8. The transmission lines L1 to L9 are electric wires used for power transmission from the generators G1 to G3 to the loads D1 to D3, and the like. Note that distribution lines used for power distribution to the loads D1 to D3 are also assumed to be included in "transmission lines." The loads D1 to D3 are devices on the power demand side.

In the power system GR1, a predetermined event may occur due to various factors. Here, an "event" means a malfunction that can occur in the power system GR1. Examples of such events will be described using FIG. 2A to FIG. 2C.

FIG. 2A is an explanatory diagram showing an example of an event in the power system GR1, showing a case where the output of the generator G1 increases or decreases.

For example, if the generator G1 shown in FIG. 2A is a renewable energy power generation facility, the output (generated power) of the generator G1 may significantly increase or decrease with changes in weather and wind conditions. In the example of FIG. 2A, the change width when the output of the generator G1 increases or decreases is +/- 5 [MW]. When the output of the generator G1 changes significantly in this way, the transmission power flow of the transmission lines L1 to L9 and the voltage of the buses B1 to B8 change, and the effect may propagate in a chain reaction.

FIG. 2B is an explanatory diagram showing another example of an event in the power system GR1, showing a case where a circuit breaker of the transmission line L3 is opened.

For example, if a circuit breaker (not shown) of the transmission line L3 is opened due to a lightning strike, the connection relationship of the power system GR1 changes, and the effect may propagate in a chain reaction.

FIG. 2C is an explanatory diagram showing another example of an event in the power system GR1, showing a case where the power consumption of the load D1 increases or decreases.

For example, the power consumption of the load D1 may significantly increase due to an increase in the power consumption of air conditioning on a cold winter day or a hot summer day. In the example of FIG. 2C, the change width when the power consumption of the load D1 increases or decreases is +/- 5 [MW].

Each piece of equipment in the power system GR1, including the transmission lines L1 to L9, is designed on the premise that voltage and transmission power flow are operated within a predetermined range. If the voltage or the like exceeds the predetermined range, protective equipment such as circuit breakers may operate to prevent equipment damage, causing the transmission power flow to change, and the effect may propagate in a chain reaction.

Therefore, in the first embodiment, the power system stabilization system 100 (see FIG. 3) is configured to formulate a predetermined countermeasure based on preventive control. Examples of such preventive control include, in addition to changing the output of the generators G1 to G3, demand response to each consumer and changing the connection configuration of the power system GR1. This ensures that the transmitted power of the transmission lines L1 to L9 does not exceed a predetermined threshold value based on the transmission capacity. Hereinafter, as an example of preventive control, a case where the power system stabilization system 100 (see FIG. 3) changes the output of the generators G1 to G3 will be described.

FIG. 3 is a diagram showing a hardware configuration of the power system stabilization system 100.

The power system stabilization system 100 is a system for achieving stabilization of the power system GR1. As shown in FIG. 3, the power system stabilization system 100 is configured to include a power system stabilization device 10, a communication network N1, a measuring instrument 20, and a control terminal 30.

The power system stabilization device 10 may be configured with a single computer, or may be configured with a plurality of mutually communicable computers (such as servers). The functions of the power system stabilization device 10 may also be realized on the cloud. The power system stabilization device 10 is configured to perform a predetermined calculation based on the measured values of the measuring instrument 20 and the like, and to transmit a predetermined control signal to the control terminal 30 based on the calculation result.

As shown in FIG. 3, the power system stabilization device 10 includes, as a hardware configuration, a program database 11, a database 12, a memory 13, an input unit 14, a processing unit 15, a display unit 16 (display device), a communication unit 17, and a bus 18 that connects these components. The program database 11 stores in advance programs for performing predetermined calculation processes. The other database 12 stores data used for executing the aforementioned programs and predetermined calculation results.

The memory 13 appropriately stores programs and calculation results when various programs are executed. For example, a flash memory or a RAM (Random Access Memory) is used as such a memory 13. The input unit 14 is for inputting predetermined data based on user operations. For example, a keyboard, a mouse, a stylus, or a microphone is used as such an input unit 14.

The processing unit 15 executes a predetermined calculation process based on a program stored in the program database 11. For example, a CPU (Central Processing Unit) or a GPU (Graphics Processing Unit), as well as an FPGA (Field Programmable Gate Array) or a TPU (Tensor Processing Unit), is used as such a processing unit 15. The processing unit 15 then expands the program from the program database 11 into the memory 13 and performs a predetermined process.

The display unit 16 displays in a predetermined manner data input via the input unit 14, the calculation results of the processing unit 15, and the like. For example, a display is used as such a display unit 16. Note that a mobile terminal (not shown) such as a tablet or a smartphone may function as the input unit 14 or the display unit 16.

The communication unit 17 has a function of receiving data of predetermined measured values from the measuring instrument 20 via the communication network N1, and transmitting a predetermined control command value to the control terminal 30 via the communication network N1. The measuring instrument 20 is for measuring physical quantities at predetermined locations in the power system GR1. For example, an SV/TM or a PMU (Phasor Measurement Unit) is used as such a measuring instrument 20. Examples of the aforementioned physical quantities include voltage, current, voltage phase, current phase, and frequency. The voltage and current in the power system GR1 may be measured as effective values, or may be measured in phasor format or as instantaneous values.

The control terminal 30 is a device that is controlled in a predetermined manner based on a control signal transmitted from the power system stabilization device 10 via the communication network N1. For example, a relay is used as such a control terminal 30. The aforementioned relay is used, for example, when changing the output of the generators G1 to G3 (see FIG. 1). In addition, a relay (that is, the control terminal 30) is also used when changing the transformation ratio of a transformer (not shown) provided in a substation, or when opening or closing a circuit breaker (not shown) of the transmission lines L1 to L9 (see FIG. 1). Although one measuring instrument 20 and one control terminal 30 are shown in FIG. 3, in reality, a large number of measuring instruments 20 and control terminals 30 are installed in the power system GR1.

FIG. 4 is a functional block diagram of the power system stabilization device 10.

The power system stabilization device 10 shown in FIG. 4 includes, as databases (hereinafter referred to as "DB") in which predetermined input data is stored, a power system model DB 41, a power system state DB 42, an event list DB 43, a constraint screening parameter DB 44, and a cost function DB 45. The aforementioned input data may be input by an operation via the input unit 14 (see FIG. 3), or may be acquired from an external server or the like (not shown) via the communication network N1 (see FIG. 3).

The power system stabilization device 10 also includes, as a functional configuration of the processing unit 15 (see FIG. 3), a constraint condition construction unit 46, a constraint screening unit 47, a preventive control calculation unit 48, and a preventive control execution unit 49. Note that the display unit 16 shown in FIG. 4 corresponds to the display unit 16 described with reference to FIG. 3.

The power system stabilization device 10 also includes, as databases in which predetermined output data is stored, a constraint condition list DB 51, a screened constraint list DB 52, a preventive control DB 53, and a preventive control evaluation result DB 54.

The power system model DB 41 stores data of a power system model, which is a model of the power system GR1 (see FIG. 1). The power system model includes data indicating the constituent elements and connection relationship of the power system GR1, as well as data such as the impedance and transmission capacity of the transmission lines L1 to L9 (see FIG. 1), the connection positions of the loads D1 to D3 (see FIG. 1), and the upper and lower value and the lower limit value of the output of the generators G1 to G3 (see FIG. 1).

The power system state DB 42 stores data of a power system state, which indicates the state of the power system GR1 (see FIG. 1). For example, data of the power system state, such as the voltage and voltage phase at the buses B1 to B8 (see FIG. 1), the active power and reactive power at the transmission lines L1 to L9 and transformers (not shown), and the open/closed state of power transmission equipment (circuit breakers: not shown), is stored in the power system state DB 42. Note that the power system state also changes from moment to moment with changes in the state of the power system GR1 (see FIG. 1). As such data of the power system state, for example, measured values from the measuring instrument 20 (see FIG. 3) may be used, or virtual data for simulation may be used.

The event list DB 43 stores a list of events assumed in the power system GR1. Examples of such events include, as mentioned above, increases and decreases in generated power (see FIG. 2A) and changes in the connection relationship of the power system GR1 (see FIG. 2B), as well as increases and decreases in demand power (see FIG. 2C). In addition, for example, faults in transmission lines or communication lines included in the power system GR1 may be included as events.

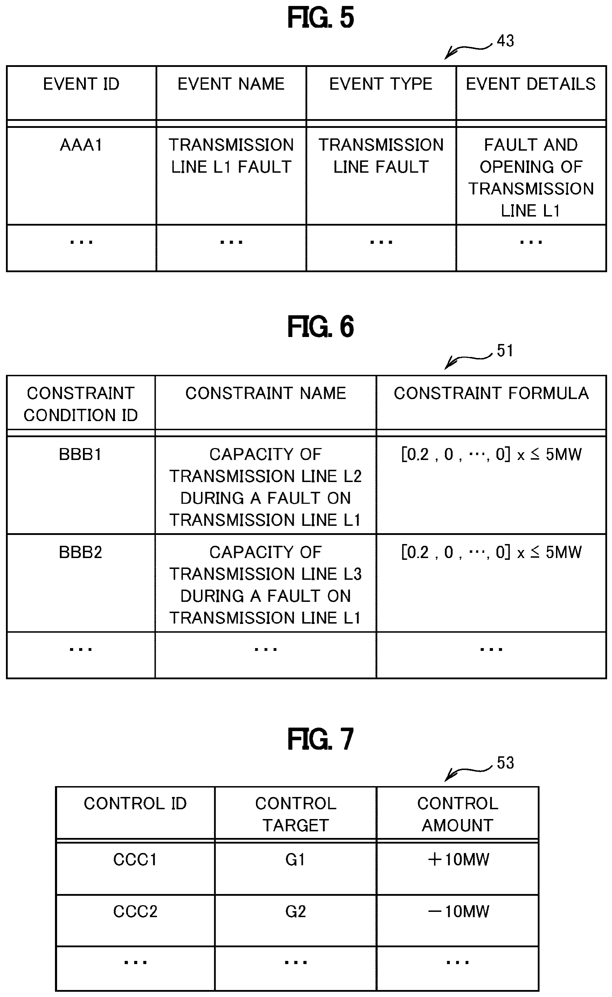

FIG. 5 is an explanatory diagram showing an example of the event list DB 43.

In the example of FIG. 5, in the event list DB 43, an event ID, an event name, an event type, and event details are associated with each other. To give a specific example, in the event with the event ID AAA1, a transmission line fault is specified for the case where a circuit breaker is opened due to a fault on the transmission line L1 (see FIG. 1). In the first embodiment, preventive control assuming a transmission line fault will be described as an example, but the type of event is not limited to this.

The constraint screening parameter DB 44 shown in FIG. 4 is a database in which the value of a constraint screening parameter is stored. Here, the "constraint screening parameter" is a value that serves as a criterion for whether to perform screening of a predetermined constraint condition. "Screening" means omitting unnecessary constraint conditions in preventive control. The first embodiment describes a case where a predetermined constraint screening parameter is set by a user's operation via the input unit 14 (see FIG. 3). Note that the constraint screening parameter may be a fixed value, or may be appropriately changed at predetermined time intervals.

The cost function DB 45 shown in FIG. 4 is a database in which a predetermined cost function used for preventive control is stored. The aforementioned "cost function" may be, for example, one that minimizes the absolute value of the output change amount of the generators G1 to G3 (see FIG. 1), or may be one that reduces monetary costs. Note that weighting factors and the like for when weighting is applied to a plurality of control amounts in preventive control may be included in the cost function.

The constraint condition construction unit 46 constructs the constraint condition list DB 51 based on the respective data of the power system model DB 41, the power system state DB 42, and the event list DB 43. For example, the constraint condition construction unit 46 generates a list of constraint conditions for each event so that the power system state of each piece of equipment in the power system model (for example, the respective transmitted power of the transmission lines L1 to L9) does not exceed a predetermined threshold value.

The constraint condition list DB 51 is a database in which the list of constraint conditions constructed by the constraint condition construction unit 46 is stored. Hereinafter, the list of constraint conditions for when preventive control is performed on the power system GR1 (see FIG. 1) is referred to as a "constraint condition list." The constraint conditions are expressed, for example, in a mathematical optimization format like the following formula (1).

[Math. 1]

$$\text{s.t.} \quad Ax \le b \quad \cdot \cdot \cdot (1)$$

Note that "s.t." at the beginning of formula (1) is an abbreviation for "subject to" and means "to be subject to the condition that ..." The letter A included in formula (1) is an $M \times N$ matrix used for the constraint conditions. x is a vector including N decision variables as elements. For example, when the outputs of the generators G1 to G3 (see FIG. 1) are changed in the preventive control of the power system GR1 (see FIG. 1), the vector x is set to include a plurality of elements corresponding to the respective outputs of the generators G1 to G3.

b included in formula (1) is M constraint vectors. The constraint vector b represents, for example, a constraint condition such that the respective transmitted power of the transmission lines L1 to L9 (see FIG. 1) is maintained to a predetermined value or less. The inequality sign included in formula (1) represents that each element of the vector resulting from the calculation of Ax is less than or equal to the value of the element of the constraint vector b. Note that although the constraint conditions are expressed in the form of an equality constraint in formula (1), they are not limited to this. For example, the constraint conditions may be expressed in the form of an inequality constraint, or may be expressed in the form of a non-linear or non-convex constraint.

FIG. 6 is an explanatory diagram showing an example of the constraint condition list DB 51.

In the example of FIG. 6, in the constraint condition list DB 51, a constraint condition ID, a constraint name, and a constraint formula are associated with each other. For example, as the constraint condition with the constraint condition ID BBB1, a constraint condition is set such that even if a fault occurs on the transmission line L1 (see FIG. 1), the transmitted power of the transmission line L2 (see FIG. 1) does not exceed a predetermined value (a threshold value based on the transmission capacity).

Generally, the greater the number of transmission lines, the larger the value of M (the number of constraint conditions, the number of rows in the matrix A) becomes. Depending on the configuration of the power system, the value of M can be tens of thousands or hundreds of thousands. Therefore, attempting to calculate formula (1) as is may take an enormous amount of time. Therefore, in the first embodiment, the constraint screening unit 47 shown in FIG. 4 is configured to reduce the size of the matrix A by omitting (that is, performing screening on) unnecessary ones among the plurality of constraint conditions included in the matrix A. This significantly shortens the calculation time required for preventive control, making it possible to perform preventive control online (that is, in real time) regardless of the scale of the power system.

The constraint screening unit 47 shown in FIG. 4 generates a screened constraint list DB 52 based on the respective data of the constraint screening parameter DB 44 and the constraint condition list DB 51. The screened constraint list DB 52 is a database in which a screened constraint list, which is a list of screened constraint conditions, is stored. In other words, the screened constraint list is a list of constraint conditions after those with little influence have been omitted from the plurality of constraint conditions included in the matrix A of formula (1). The screened constraint list is expressed, for example, in a mathematical optimization format like the following formula (2).

[Math. 2]

$$\text{s.t.} \quad A'x \le b' \quad \cdot \cdot \cdot (2)$$

A' included in formula (2) is an M'×N matrix used for the constraint conditions. Note that since the matrix A' is what remains after unnecessary constraint conditions have been omitted from the matrix A included in formula (1), the value of M' is smaller than the value of M (M' < M). x included in formula (2) is a vector including N decision variables as its elements. b' included in formula (2) is M' constraint vectors. By using the screened constraint list represented by formula (2), the calculation time for performing preventive control is significantly shortened compared to the case of using formula (1) as is, thereby enabling higher speed calculation.

A preventive control calculation unit 48 (processing unit 15: FIG. 3) shown in FIG. 4 calculates a control amount for performing the preventive control, based on the power system model, the power system state, the event list, the screened constraint list, and a predetermined cost function. That is, the preventive control calculation unit 48 calculates the control amount and the state quantity after control for the equipment of the power system GR1 (see FIG. 1), and stores the calculation result in a preventive control DB 53. The preventive control calculation unit 48 also evaluates the calculation result of the preventive control and stores the evaluation result in a preventive control evaluation result DB 54.

As described above, since the screened matrix A' is smaller in size than the pre-screening matrix A, the calculation for preventive control can be performed in a short time. Accordingly, it becomes possible to repeat the preventive control of the power system GR1 online (that is, in real time) at short intervals, such as every few seconds, tens of seconds, or few minutes.

FIG. 7 is an explanatory diagram showing an example of the preventive control DB 53.

As described above, the preventive control DB 53 stores data such as the control amount for the equipment of the power system GR1 (see FIG. 1) and the state quantity after control. In the example of FIG. 7, in the preventive control DB 53, a control ID, a control target, and a control amount are associated with each other. For example, in the preventive control with the control ID CCC1, the control target is the generator G1 (see FIG. 1), and the control amount is +10 [MW]. That is, it is shown that, as preventive control, the output of the generator G1 is to be increased by 10 [MW] from its current state.

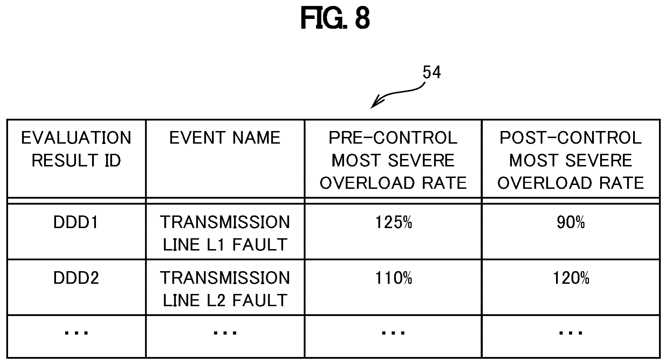

FIG. 8 is an explanatory diagram showing an example of the preventive control evaluation result DB 54.

As described above, the preventive control evaluation result DB 54 stores data of the evaluation result related to the preventive control. In the example of FIG. 8, in the preventive control evaluation result DB 54, an evaluation result ID, an event name, a pre-control most severe overload rate, and a post-control most severe overload rate are associated with each other.

Note that the "most severe overload rate" in FIG. 8 is the load factor of the one among the transmission lines L1 to L9 (see FIG. 1) that has the highest ratio of transmitted power to transmission capacity. The "pre-control most severe overload rate" is the most severe overload rate before preventive control is performed. The "post-control most severe overload rate" is the most severe overload rate after preventive control has been performed. For example, in the item with the evaluation result ID DDD1, the pre-control most severe overload rate when the transmission line L1 has faulted (that is, become overloaded) is 125%, and the post-control most severe overload rate is 90%. In other words, by performing preventive control, the transmitted power of the transmission lines L1 to L9 (see FIG. 1) is maintained to be equal to or less than the transmission capacity.

A preventive control execution unit 49 shown in FIG. 4 executes preventive control of the power system GR1 (see FIG. 1) based on the data in the preventive control DB 53. That is, the preventive control execution unit 49 transmits a predetermined control signal to the control terminal 30 (see FIG. 3) via the communication network N1 (see FIG. 3). This allows preventive control, such as changing the output of the generators G1 to G3, to be executed appropriately.

Note that preventive control may be performed by outputting a control signal to a virtual control terminal (not shown) in a digital simulator (not shown).

Preventive control may also be started when a user who has confirmed the evaluation result of the preventive control and the like presses an execution button (not shown) on the screen of the display unit 16 (see FIG. 4). The data of each database, such as the constraint condition list DB 51 and the screened constraint list DB 52, as well as the preventive control DB 53 and the preventive control evaluation result DB 54, is displayed in a predetermined manner on the display unit 16. This allows the user to confirm the result of the process by the processing unit 15 (see FIG. 3).

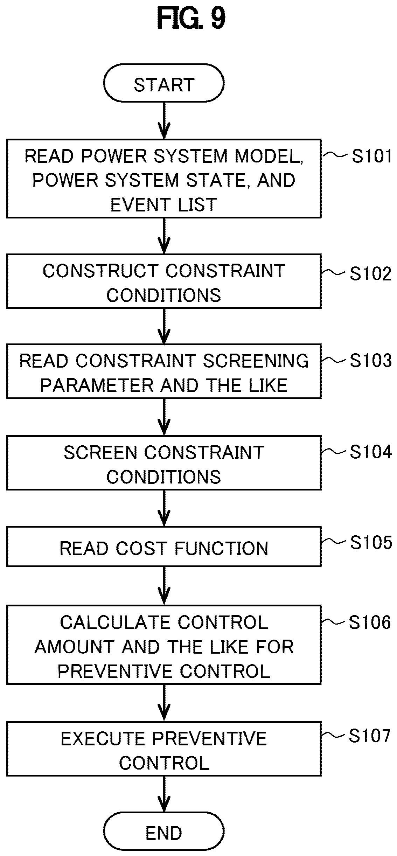

FIG. 9 is a flowchart showing a process executed by the processing unit of the power system stabilization device (see also FIG. 4 as appropriate).

In step S101, the processing unit 15, by means of the constraint condition construction unit 46, reads the respective data of the power system model, the power system state, and the event list. That is, the processing unit 15 reads the respective data of the power system model DB 41, the power system state DB 42, and the event list DB 43.

In step S102, the processing unit 15, by means of the constraint condition construction unit 46, constructs the constraint conditions. For example, the processing unit 15 generates a constraint condition list expressed in a mathematical optimization format (see formula (1)) and stores this constraint condition list in the constraint condition list DB 51. In this way, the processing unit 15 generates the constraint condition list based on the power system model, the power system state, and the event list (constraint condition list generation process).

In step S103, the processing unit 15, by means of the constraint screening unit 47, reads the constraint screening parameter and the like. As described above, the constraint screening parameter is a threshold value that serves as a criterion for whether to screen the constraint conditions, and is stored in the constraint screening parameter DB 44.

In step S104, the processing unit 15, by means of the constraint screening unit 47, screens the constraint conditions. That is, the processing unit 15 omits the constraint conditions with little influence from among the plurality of constraint conditions included in the matrix A (see formula (1)), thereby generating a small-sized matrix A' (see formula (2)). The constraint conditions after screening are stored in the screened constraint list DB 52.

The processing unit 15, when creating the screened constraint list, may be configured to re-enable a predetermined constraint condition specified by a user's operation of the input unit 14 (see FIG. 3) from among one or more constraint conditions screened from the constraint condition list. This allows the user to leave intact (or restore after screening) the constraint conditions that the user wished to keep, thereby increasing the degree of freedom in setting for the screening.

In step S105, the processing unit 15, by means of the preventive control calculation unit 48, reads a cost function. As described above, the cost function is a predetermined function that includes the control cost for performing preventive control, and is stored in the cost function DB 45.

In step S106, the processing unit 15, by means of the preventive control calculation unit 48, calculates the control amount and the like for the preventive control.

In step S107, the processing unit 15, by means of the preventive control execution unit 49, executes the preventive control. By executing the preventive control in this manner, the state of the power system GR1 (see FIG. 1) changes in a predetermined way. As a result, it is possible to prevent a situation where other transmission lines become overloaded when a fault occurs on a predetermined transmission line. After performing the process of step S107, the processing unit 15 ends the series of processes (END). Note that the series of processes shown in FIG. 9 may be repeated in a predetermined manner. The results of the respective processes in steps S101 to S107 shown in FIG. 9 are each displayed in a predetermined manner on the display unit 16 (see FIG. 3).

Next, the process of step S102 in FIG. 9 (construction of constraint conditions) will be described in detail.

The processing unit 15 (see FIG. 3) performs preventive control so that each state quantity of the power system GR1 is maintained to be equal to or less than a predetermined upper limit value even when a predetermined event occurs. Mathematically, the relationship shown in the following formula (3) is maintained in the power system GR1 (see FIG. 1).
[Math. 3]

$$s.t. \quad G(x, y\_0) \leq g \quad \cdots (3)$$

G(x, y_0) included in formula (3) is a prediction function that represents the state after an event occurs when a predetermined preventive control x is performed on the state y_0 (the most recent state) of the power system GR1 (see FIG. 1). The vector g includes the upper limit values of predetermined state quantities in the power system GR1 (see FIG. 1) and is generated based on the data in the power system model DB 41 (see FIG. 4). As such a vector g, for example, the upper limit values of the transmitted power of the transmission lines L1 to L9 (see FIG. 1) may be used. As a prediction function when the occurrence of a predetermined event is assumed, for example, the following function is used.

[Math. 4]

$$P_k^{line} + A_{k,\,m} \begin{bmatrix} \Delta P^1 \\ \vdots \\ \Delta P^N \end{bmatrix} \leq P_k^{line,\ rating} \mid \forall k \in L,\ m \in M \quad \cdots (4)$$

Note that $P_k^{line}$ (where "^" indicates a superscript) included in formula (4) is the transmission power flow on the transmission line k (that is, one of the transmission lines L1 to L9 in FIG. 1) in the base case, and represents the most recent state of the transmission line k. $A_{k,m}$ is a 1×N (where N is the number of decision variables) vector and represents the sensitivity with which the transmission power flow on the transmission line k is affected when a predetermined event occurs after preventive control has been performed. $\Delta P^g$ is the output change amount of the generator g (that is, one of the generators G1 to G3 in FIG. 1). For example, $\Delta P^1$ represents the output change amount of the generator G1 (see FIG. 1). $P_k^{line}$,rating represents the power flow constraint on the transmission line k.

Explaining the correspondence between formula (4) and formula (3), first, $P_k^{line}$, which represents the most recent state of the transmission line k in formula (4), corresponds to y_0 in formula (3). $A_{k,m}$, which represents the sensitivity of the transmission power flow when an event occurs in formula (4), corresponds to G(x, y_0) in formula (3). $\Delta P^g$, which represents the output change amount of the generator g in formula (4), corresponds to the preventive control x in formula (3). $P_k^{line}$,rating, which represents the power flow constraint of the transmission line k in formula (4), corresponds to the vector g in formula (3).

In short, formula (4) represents that, after preventive control ($\Delta P^g$) is performed from a certain state ($P_k^{line}$), when a predetermined transmission line faults, the transmitted power on another transmission line k is maintained to be equal to or less than a predetermined power flow constraint ($P_k^{line}$,rating). In this way, a constraint condition indicating that the transmitted power of each of the transmission lines L1 to L9 (see FIG. 1) of the power system GR1 will be equal to or less than the value of a predetermined power flow constraint, when it is assumed that a predetermined event has occurred in the power system GR1 (see FIG. 1), is included in the constraint condition list.

As described above, $A_{k,m}$ included in formula (4) is a 1×N (where N is the number of decision variables) vector. The number of combinations of transmission line faults due to overload becomes equal to the total number of events (= $L^2$, where L is the number of transmission lines) and also equal to the number of constraint conditions (M). Corresponding to these individual events, there are M (= $L^2$) vectors $A_{k,m}$. Such a vector $A_{k,m}$ is represented by the following formula (5).

[Math. 5]

$$A_{k,\,m} = \begin{bmatrix} a_{k,m,1}, \ldots, a_{k,m,n}, \ldots, a_{k,m,N} \end{bmatrix} \quad \cdots (5)$$

Note that the subscript k of a included in formula (5) corresponds to a predetermined transmission line among the L transmission lines (1 ≤ k ≤ L). m corresponds to a predetermined event among the M events (1 ≤ m ≤ M). n corresponds to the N decision variables (1 ≤ n ≤ N). A matrix representation of the M vectors $A_{k,m}$ is the matrix A of formula (1). Hereinafter, the element $a_{k,m,n}$ of the vector $A_{k,m}$ will be referred to as a "coefficient." The vector $A_{k,m}$ is calculated by a well-known method based on the PTDF (Power Transfer Distribution Factor) and LODF (Line Outage Distribution Factor) of the power system model.

In addition to formula (4) described above, examples of constraint conditions for preventive control include the one shown in the following formula (6).

[Math. 6]

$$\sum \Delta P^g = 0 \mid \forall g \in N \quad \cdots (6)$$

$\Delta P^g$ included in formula (6) is the output change amount of the generator g. N is the number of decision variables (that is, the number of control targets). That is, formula (6) represents setting the sum of the change amounts when changing the control amount at the control target to 0. For example, if the output of the generator G1 (see FIG. 1) is to be lowered from a state where power is being supplied normally, control is performed such that the sum of the outputs of the remaining generators G2, G3 (see FIG. 1) is raised to compensate for this output decrease. As another constraint condition, for example, the one shown in the following formula (7) can be given.
[Math. 7]

$$\Delta P_{min}{}^g \leq \Delta P^g \leq \Delta P_{max}{}^g \mid \forall g \in N \quad \cdots (7)$$

Note that $P_{min}{}^g$ included in formula (7) is the lower limit value of the output change amount of the generator g. $P_{max}{}^g$ is the upper limit value of the output change amount of the generator g. In other words, formula (7) represents keeping the control amount of the preventive control within a predetermined range. The constraint conditions of formula (4), formula (6), and formula (7) are stored in the constraint condition list DB 51 (see FIG. 4).

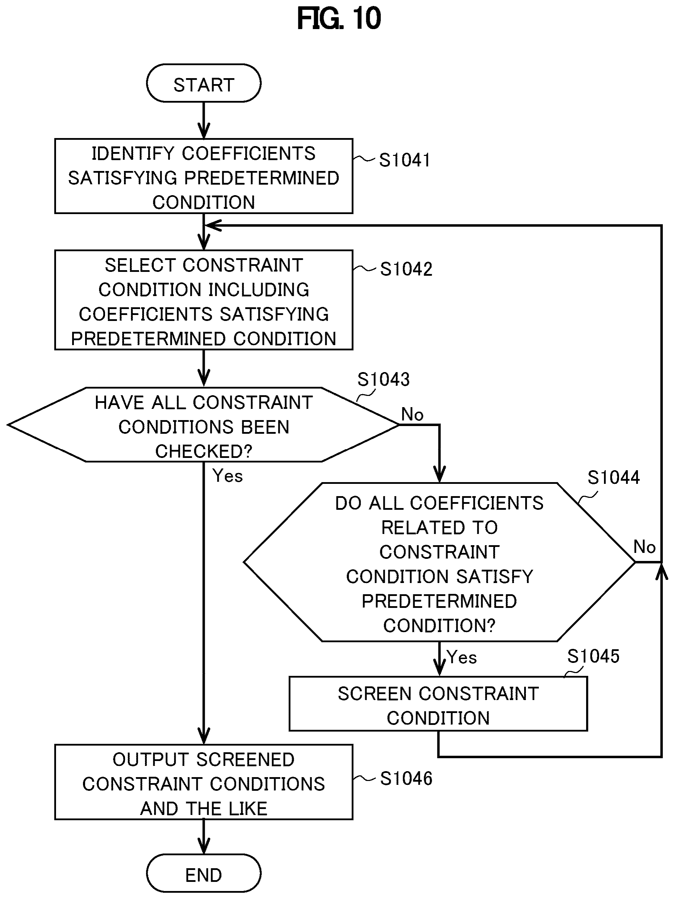

Next, the process of step S104 in FIG. 9 (screening of constraint conditions) will be described in detail using FIG. 10.

FIG. 10 is a flowchart related to the screening of constraint conditions.

Note that it is assumed that prior to the process of step S1041 in FIG. 9, predetermined constraint conditions have been constructed (S102 in FIG. 9), and furthermore, data such as the constraint screening parameter has been read (S103 in FIG. 9).

In step S1041, the processing unit 15 identifies those among the coefficients $a_{k,m,n}$ (see also formula (5)), which are elements of the vector $A_{k,m}$, that satisfy a predetermined condition. Specifically, the processing unit 15, as shown in the following formula (8), identifies coefficients $a_{k,m,n}$ whose absolute value is less than or equal to the constraint screening parameter $\varepsilon$.
[Math. 8]

$$|a_{k,m,n}| \leq \epsilon \mid \forall n \in N \quad \cdots (8)$$

For example, among the coefficients $a_{k,m,n}$ that are elements of the vector $A_{k,m}$, one where $a_{k,m,n} \approx 0$ has a high possibility that the influence on the predetermined transmission line corresponding to this $a_{k,m,n}$ is small, therefore it can be said to be not very important in preventive control.

Next, in step S1042, the processing unit 15 selects a constraint condition that includes a coefficient $a_{k,m,n}$ satisfying the predetermined condition. That is, the processing unit 15 selects a constraint condition (that is, one of the M vectors $A_{k,m}$) that includes a coefficient $a_{k,m,n}$ whose absolute value is less than or equal to the constraint screening parameter $\varepsilon$.

Next, in step S1043, the processing unit 15 determines whether all constraint conditions have been checked. That is, the processing unit 15 determines whether the possibility of screening has been checked for all of the M vectors $A_{k,m}$. In step S1043, if there is a constraint condition that has not been checked (S1043: No), the process of the processing unit 15 proceeds to step S1044.

In step S1044, the processing unit 15 determines whether all coefficients $a_{k,m,n}$ related to the constraint condition satisfy the predetermined condition. That is, the processing unit 15 determines whether all of its coefficients $a_{k,m,n}$ are less than or equal to the constraint screening parameter $\varepsilon$ in the predetermined vector $A_{k,m}$ corresponding to the constraint condition selected in step S1042. In step S1044, if all the coefficients $a_{k,m,n}$ related to the constraint condition satisfy the predetermined condition (S1044: Yes), the process of the processing unit 15 proceeds to step S1045.

In step S1045, the processing unit 15 screens the constraint condition. That is, the processing unit 15 changes the values of all the coefficients $a_{k,m,n}$ of the vector $A_{k,m}$ corresponding to the constraint condition selected in step S1042 to zero, thereby omitting this constraint condition. In other words, when each of a plurality of constraint conditions is represented by a polynomial, if, for all of the coefficients $a_{k,m,n}$ included in a predetermined polynomial, the absolute value of the coefficient $a_{k,m,n}$ (or the square of the value of the coefficient $a_{k,m,n}$) is less than or equal to the constraint screening parameter $\varepsilon$, the processing unit 15 screens the constraint condition represented by this polynomial.

This omits, from among the M constraint equations (vector $A_{k,m}$), those constraint conditions that are not particularly important in the preventive control of the power system GR1 (see FIG. 1). Even if a predetermined event m occurs, there is a high possibility that the transmission line k corresponding to the screened coefficient $a_{k,m,n}$ will be hardly affected; therefore, no particular problem arises even if unimportant constraint conditions are omitted.

By screening the constraint conditions in this way (omitting a predetermined vector $A_{k,m}$), the number of rows in the matrix A (see formula (1)), which is a matrix of the M vectors $A_{k,m}$, can be reduced to form the matrix A' (see formula (2)). In other words, because the number of constraint equations for performing preventive control can be reduced, the problem size can be made smaller. As a result, the calculation time for performing preventive control is significantly shortened, and it becomes possible to perform preventive control online. After performing the process of step S1045 in FIG. 10, the process of the processing unit 15 returns to step S1042.

If, in step S1044, there is a coefficient $a_{k,m,n}$ related to the constraint condition that does not satisfy the predetermined condition (S1044: No), the process of the processing unit 15 returns to step S1042. Then, in step S1042, another constraint condition (vector $A_{k,m}$) that includes a coefficient $a_{k,m,n}$ whose absolute value is less than or equal to the constraint screening parameter ε is selected.

If, in step S1043, all constraint conditions have been checked (S1043: Yes), the process of the processing unit 15 proceeds to step S1046.

In step S1046, the processing unit 15 outputs the screened constraint conditions and the like. That is, the processing unit 15 generates the screened constraint list DB 52 (see FIG. 4) and causes the display unit 16 (see FIG. 4) to display it. Note that the screened constraint list is a list of constraint equations that satisfy the condition of the following formula (9). In other words, a list of constraint conditions that include a coefficient $a_{k,m,n}$ whose absolute value is greater than the screening parameter ε is generated as the screened constraint list.

[Math. 9]

$$\left| a_{k,m,n} \right| > \epsilon \mid \forall n \in N \quad \cdots \quad (9)$$

In addition, for example, the value of the constraint screening parameter ε may be displayed on the display unit 16 (see FIG. 4). That is, the processing unit 15 causes the display unit 16 (display device) to display information including the constraint screening parameter ε and the screened constraint list (display process). This allows the user to confirm the constraint screening parameter ε and the screened constraint list, which makes it easier to perform the settings for preventive control. After performing the process of step S1046, the processing unit 15 ends the series of processes related to the screening of constraint conditions (S104 in FIG. 9) (END).

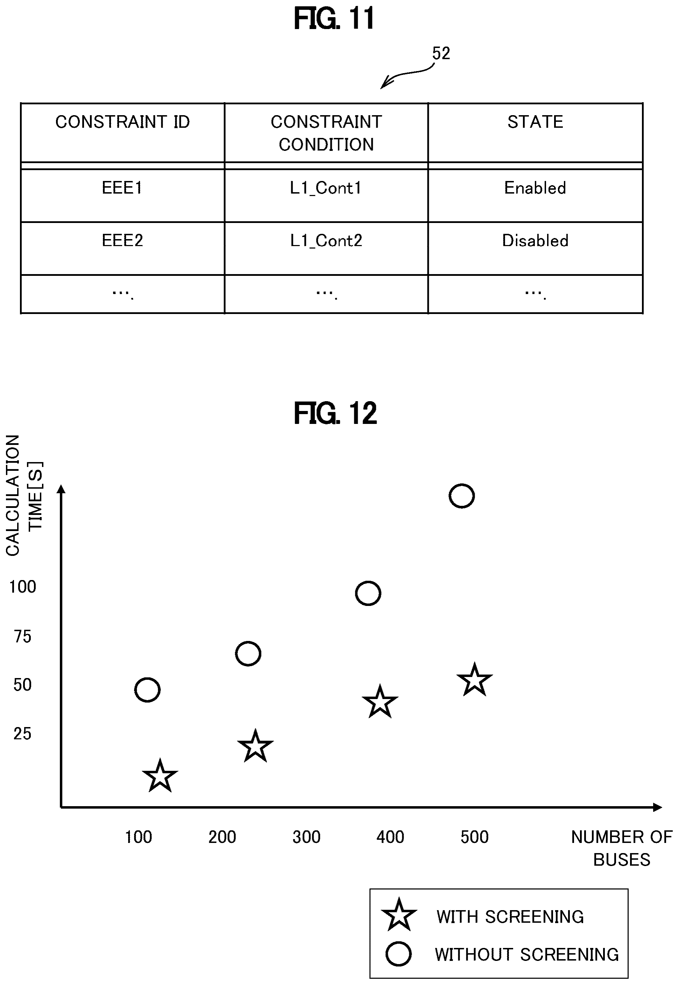

FIG. 11 is an explanatory diagram showing an example of the screened constraint list DB 52.

In the example of FIG. 11, in the screened constraint list DB 52, a constraint ID, a constraint condition, and a state are associated with each other. For example, in the item with the constraint ID EEE1, a predetermined constraint condition is applied (Enabled) for the influence that a change in the control amount of "Cont1" has on the transmission line L1 (see FIG. 1). In the item with the constraint ID EEE2, screening is performed for the influence that a change in the control amount of "Cont2" has on the transmission line L1, with the result that the constraint condition is no longer applied (Disabled).

Next, the process of step S105 in FIG. 9 (reading of the cost function) will be described.

The cost function is represented, for example, by the following formula (10). Note that ΔP included in formula (10) represents the control amount of equipment such as the generators G1 to G3 (see FIG. 1) included in the power system GR1 (see FIG. 1). In other words, the cost function is set to minimize the absolute value of the control amount of the equipment included in the power system GR1.

[Math. 10]

$$\min \sum |\Delta P| \quad \cdots \quad (1\,0)$$

Next, the process of step S106 in FIG. 9 (calculation of the control amount, etc., for preventive control) will be described in detail. The processing unit 15 (see FIG. 4) calculates the control amount and the like for the preventive control by generating an optimization model based on the respective data of the cost function DB 45 and the screened constraint list DB 52. For example, the optimization model may be generated based on the cost function of formula (10), formula (6) and formula (7) described above, as well as the constraint equation of the following formula (11).

[Math. 11]

$$\text{s. t.} \quad P_k^{line} + A_{k, m} \begin{bmatrix} \Delta P^{1} \\ \vdots \\ \Delta P^{N} \end{bmatrix} \leq P_k^{line, \ rating} \mid |a_{k,m,n}| > \epsilon \mid \forall n \in N \quad \cdots (11)$$

Note that formula (11) represents performing optimization in a format similar to formula (4) described above, using the screened constraint conditions that include a coefficient $a_{k,m,n}$ such that $|a_{k,m,n}| > \varepsilon$.

As another method, the constraint condition list may be created in a format that assigns a predetermined penalty when a constraint condition is not complied with. In this way, when so-called solution feasibility is prioritized, in addition to formula (6) and formula (7) described above, for example, the constraint equations of the following formula (12), formula (13), and formula (14) are used.

[Math. 12]

$$\min \sum_{n \in N} \left( \Delta P_n^{g} \right)^2 + \lambda g \left( \Delta P, \ P_{slack}^{line, \ rating} \right) \quad \cdots (12)$$

$\Delta P_n{}^g$ included in formula (12) is the output change amount of the generator g. $\lambda$ is a penalty coefficient that represents the weighting of the penalty when a constraint condition is not complied with. g(...) included in formula (12) is a function whose value becomes zero when the constraint condition (formula (14), described later) with the content in parentheses as a variable is satisfied. $\Delta P$ is a predetermined control amount. $P_{slack}{}^{line, rating}$ included in formula (12) represents changing the power flow constraint of a transmission line in a predetermined manner so that the value of g(...) approaches zero. In short, formula (12) represents minimizing the cost function of the first term while imposing a predetermined penalty when a constraint condition is not complied with.

[Math. 13]

$$-\gamma P_j^{line, \ rating} \leq P_{slack, \ j}^{line, \ rating} \leq \gamma P_j^{line, \ rating} \quad \cdots (13)$$

Formula (13), which is another constraint equation, represents multiplying the upper and lower limit values by a predetermined relaxation coefficient $\gamma$ when changing the power flow constraint of a transmission line ($\Delta P_{slack,j}{}^{line, rating}$). For example, the magnitude of the relaxation coefficient $\gamma$ is adjusted appropriately when preventing the transmitted power from deviating from a predetermined range based on the transmission capacity of a transmission line, or when the user allows this predetermined range to be exceeded somewhat. Note that the value of the relaxation coefficient $\gamma$ may be incorporated into the power system model.

[Math. 14]

$$g \left( \Delta P, \ P_{slack}^{line, \ rating} \right) = \sum_{j \in J} \left( \gamma P_{slack, \ j}^{line, \ rating} \right.$$

$$\left. - \left( PTDF_i + LODF_{i, \ j} PTDF_j \right) \Delta P^g + P_i^{line} \right)^2 \quad \cdots (14)$$

Formula (14), which is another constraint equation, represents setting the value of the function g to zero if the state of each transmission line after a fault occurs on a predetermined transmission line is within an allowable range, when the output of at least one of the generators G1 to G3 (see FIG. 1) is changed. Note that PTDF (Power Transfer Distribution Factor) included in formula (14) is a numerical value that represents the amount of change in power flow on other transmission lines when the transmitted power on a certain transmission line is changed by 1 [MW]. LODF (Line Outage Distribution Factor) is a numerical value that represents the amount of change in power flow that bypasses to other transmission lines when a certain transmission line is disconnected. $P_i{}^{line}$ included in formula (14) represents the most recent state of the power system.

Although omitted in the flowchart of FIG. 9, the processing unit 15 may be configured to perform an evaluation of the preventive control based on the calculation time required to calculate the control amount and the like for the preventive control, and the constraint compliance rate. The "constraint compliance rate" described above is the ratio of complied constraint conditions to the total number of constraint conditions. A constraint condition being "complied" with means that when a predetermined event occurs after preventive control has been performed, a predetermined state quantity (for example, the transmitted power of each transmission line) falls within an allowable range. Data of the evaluation result, including the calculation time and the constraint compliance rate, is stored in the preventive control evaluation result DB 54 (see FIG. 4).

FIG. 12 is a simulation result showing an example of the effect of calculation time reduction by screening.

Note that the horizontal axis of the graph in FIG. 12 is the number of buses in the power system, and the vertical axis is the calculation time required to calculate the control amount and the like for the preventive control. The plurality of asterisks plotted in FIG. 12 show the simulation results of the first embodiment (with screening). The plurality of circles plotted in FIG. 12 show a comparative example for a case where screening was not performed.

In the comparative example (without screening) indicated by circles, as the number of buses in the power system increases, the calculation amount increases sharply, and along with it, the calculation time also becomes longer. In contrast, in the first embodiment (with screening), because the calculation amount is reduced by screening unnecessary constraint conditions, the calculation time is significantly shortened compared to the comparative example. Note that the larger the scale of the power system, the more remarkable the effect of calculation time reduction by screening tends to be.

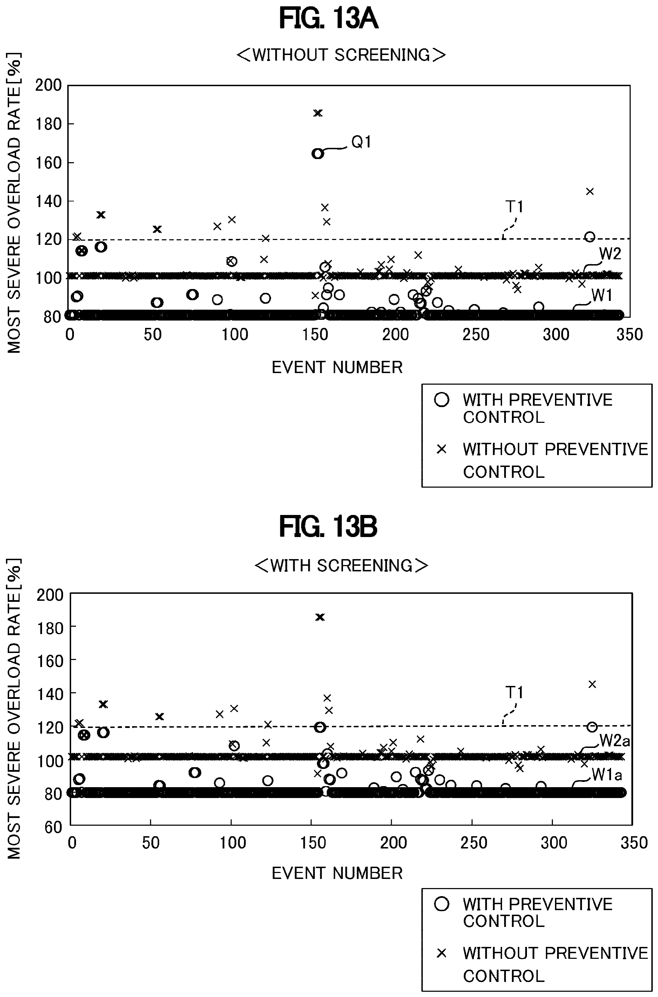

FIG. 13A is a simulation result of a comparative example in a case without screening.

Note that the horizontal axis of FIG. 13A is the event number assigned to each event. The vertical axis of FIG. 13A is the most severe overload rate. Here, the "most severe overload rate," as described above, is the load factor of the one among the plurality of transmission lines that has the highest ratio of transmitted power to transmission capacity. In FIG. 13A, the simulation results for the case where preventive control was performed are indicated by circles. The simulation results for the case where preventive control was not performed are indicated by crosses.

Note that although the portion indicated by reference sign W1 in FIG. 13A appears as a thick line, in reality, circles (data for the case where preventive control was performed) are plotted at very short intervals in the horizontal direction. Similarly, although the portion indicated by reference sign W2 also appears as a thick line, in reality, crosses (data for the case where preventive control was not performed) are plotted at very short intervals in the horizontal direction (the same applies to reference signs W1a and W2a in FIG. 13B).

The dashed line T1 at a most severe overload rate of 120% shown in FIG. 13A is a threshold value that serves as a criterion for determining whether the most severe overload rate is within an allowable range, and is set in advance. If the data for the most severe overload rate is above the dashed line T1, it is deemed that the constraint condition was not complied with.

As shown in FIG. 13A, for most events, performing preventive control maintains the most severe overload rate to 120% or less. However, even when preventive control is performed, for a predetermined event (the event corresponding to data Q1), the most severe overload rate exceeds 120%. Although the calculation time is not shown in FIG. 13A, when screening is not performed, the calculation time becomes long; therefore, preventive control online (that is, in real time) is difficult.

FIG. 13B is a simulation result in a case with screening based on the control of the first embodiment.

In the example of FIG. 13B, unlike the comparative example (see FIG. 13A), performing preventive control maintains the most severe overload rate to 120% or less in all events. Thus, it was found that screening unnecessary constraint conditions with little influence on the power system improves the result of the preventive control.

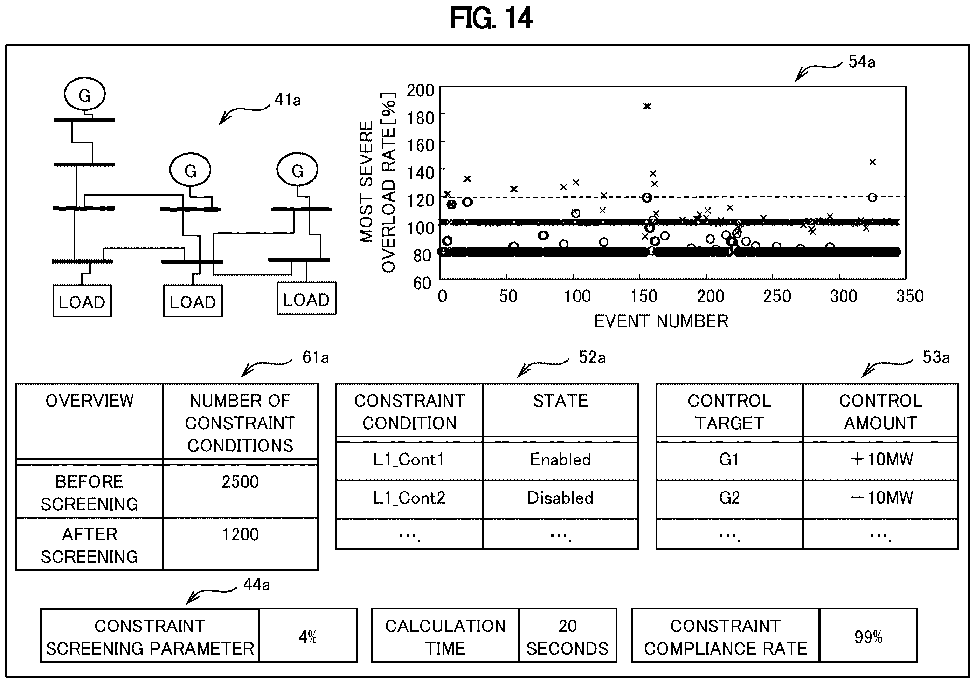

FIG. 14 is a display example of a processing result related to preventive control.

In the example of FIG. 14, in addition to the power system model 41a, the screened constraint list 52a, and the preventive control 53a, the constraint screening parameter 44a and the preventive control evaluation result 54a are displayed on the display unit 16 (see FIG. 4).

The processing unit 15 may also be configured to cause the display unit 16 (display device) to display at least one of the calculation time for performing the preventive control and the constraint compliance rate, which is the compliance rate of the constraint conditions. In the example of FIG. 14, the calculation time is 20 seconds, and the constraint compliance rate is 99%. This allows a user to grasp at a glance how much calculation time was required and at what rate the constraint conditions were complied with.

The processing unit 15 may also display on the display unit 16 (display device) the number of constraint conditions included in the constraint condition list before screening, and the number of constraint conditions included in the screened constraint list. By displaying such a comparison result 61a of the number of constraint conditions, the user can grasp to what extent the constraint conditions were reduced by screening.

Note that a part of the plurality of data shown in FIG. 14 may be displayed on the display unit 16 (see FIG. 4). Other data, such as the state quantity of a predetermined transmission line in the power system model 41a, may also be displayed. There is no particular need to display all content on one screen, and the displayed content may be switched by selecting a predetermined tab (not shown) on the display screen.

<Effects>

According to the first embodiment, the processing unit 15 mathematically identifies unnecessary constraint conditions from among the numerous constraint conditions included in the constraint condition list and performs screening. This can significantly reduce the calculation time for performing preventive control. As a result, it becomes possible to execute preventive control online (that is, in real time), regardless of the scale of the power system. Therefore, stabilization of the power system can be achieved even when the scale of the power system is large.

<<Second Embodiment>>

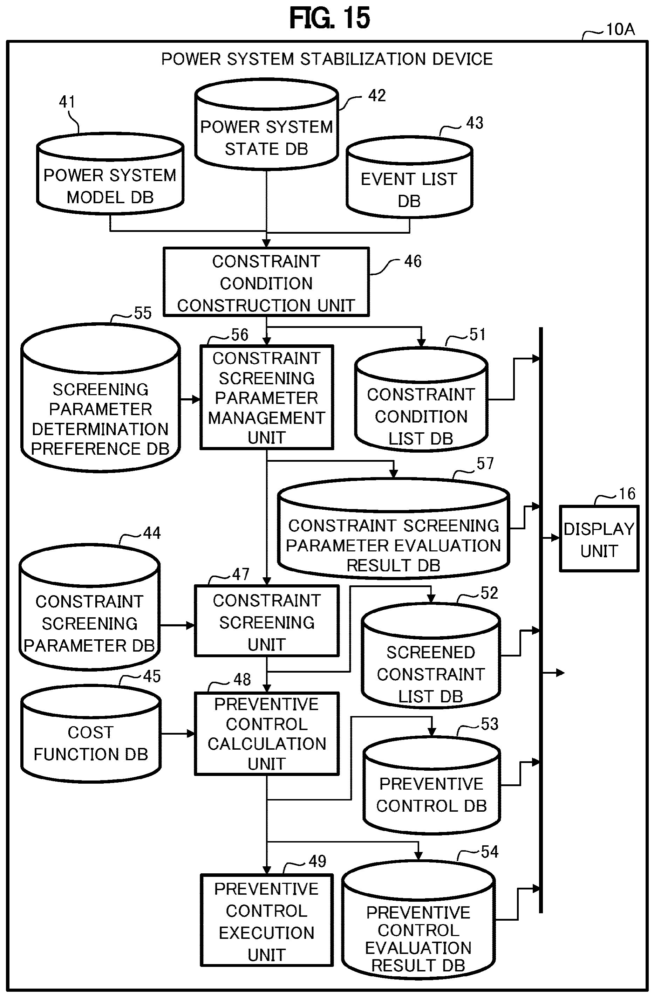

The second embodiment differs from the first embodiment in that a power system stabilization device 10A (see FIG. 15) includes a screening parameter determination preference DB 55 (see FIG. 15), as well as a constraint screening parameter management unit 56 (see FIG. 15) and a constraint screening parameter evaluation result DB 57 (see FIG. 15). Other aspects are the same as in the first embodiment. Therefore, parts that differ from the first embodiment will be described, and descriptions of overlapping parts will be omitted.

FIG. 15 is a functional block diagram of a power system stabilization device 10A included in a power system stabilization system according to the second embodiment. In addition to the components described in the first embodiment, the power system stabilization device 10A includes a screening parameter determination preference DB 55, a constraint screening parameter management unit 56, and a constraint screening parameter evaluation result DB 57, as shown in FIG. 15.

The screening parameter determination preference DB 55 stores data of a screening parameter determination preference. Here, the "screening parameter determination preference" is data that indicates a user's policy regarding the calculation time and the constraint compliance rate when performing preventive control. For example, a policy such as keeping the calculation time required for preventive control within a predetermined time, or a policy such as keeping the constraint compliance rate at or above a predetermined value, as well as a policy such as prioritizing calculation time over the constraint compliance rate, is set as the screening parameter determination preference.

The constraint screening parameter management unit 56 evaluates the constraint screening parameter $\varepsilon$ based on the screening parameter determination preference. That is, the constraint screening parameter management unit 56 calculates the calculation time and the constraint compliance rate for the case of using a predetermined constraint screening parameter $\varepsilon$ when performing preventive control on the power system GR1 (see FIG. 1).

For example, the constraint screening parameter management unit 56 individually calculates the aforementioned calculation time and constraint compliance rate for a plurality of constraint screening parameters $\varepsilon$ of different magnitudes and identifies their relationship. Note that the relationship between the constraint screening parameter $\varepsilon$ and the calculation time, and the relationship between the constraint screening parameter $\varepsilon$ and the constraint compliance rate, are represented by a predetermined mathematical formula or data table. Data indicating these relationships is stored in the constraint screening parameter evaluation result DB 57.

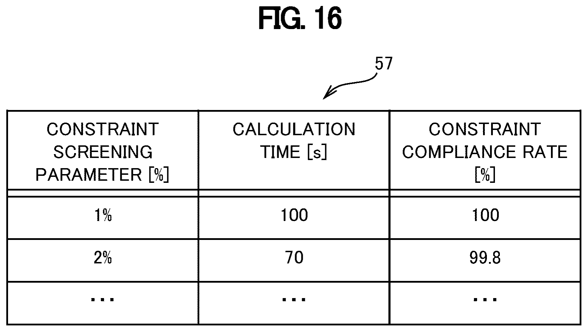

FIG. 16 is an explanatory diagram showing an example of the constraint screening parameter evaluation result DB 57.

In the example of FIG. 16, in the constraint screening parameter evaluation result DB 57, the constraint screening parameter, the calculation time, and the constraint compliance rate are associated with each other. For example, when the constraint screening parameter is set to 1 [%], the calculation time is 100 [s], and the constraint compliance rate is 100 [%]. In this way, the calculation time and the constraint compliance rate are respectively calculated for a plurality of constraint screening parameters of different magnitudes.

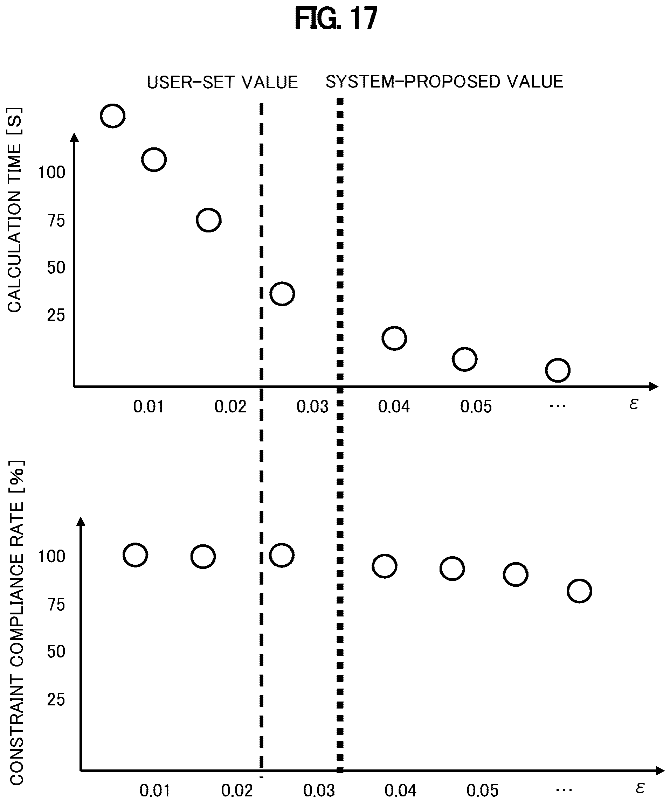

FIG. 17 is a diagram showing an example of a processing result of the constraint screening parameter management unit.

The horizontal axis of each graph in FIG. 17 is the value of the constraint screening parameter $\varepsilon$. The vertical axis of the upper graph in FIG. 17 is the calculation time for performing preventive control. The vertical axis of the lower graph in FIG. 17 is the constraint compliance rate. Note that in each data point plotted in FIG. 17, the configuration of the target power system is assumed to be the same.

The processing unit 15 (see FIG. 3), for each of a plurality of constraint screening parameters $\varepsilon$ of different magnitudes, causes the display unit 16 (display device: see FIG. 3) to display at least one of the calculation time for performing the preventive control when that constraint screening parameter $\varepsilon$ is used, and the constraint compliance rate, which is the compliance rate of the constraint conditions. This allows a user to grasp how the calculation time and the constraint compliance rate change depending on the magnitude of the constraint screening parameter $\varepsilon$.

The "user-set value" shown in FIG. 17 is the value of the constraint screening parameter $\varepsilon$ set by the user through an operation via the input unit 14 (see FIG. 3). The "system-proposed value" is the value of the constraint screening parameter $\varepsilon$ proposed by the constraint screening parameter management unit 56 based on the screening parameter determination preference. The constraint screening parameter management unit 56 calculates the system-proposed value of the constraint screening parameter ε based on the screening parameter determination preference as well as the relationships shown in the graphs of FIG. 17.

In this way, the processing unit 15 (see FIG. 3) calculates a proposed value of the constraint screening parameter based on a screening parameter determination preference that indicates the user's policy regarding the calculation time for performing preventive control and the constraint compliance rate, which is the compliance rate of the constraint conditions. The processing unit 15 then causes the display unit 16 (display device: see FIG. 3) to display this proposed value.

This allows the user to grasp the system-proposed value of the constraint screening parameter ε, which reflects a policy such as shortening the calculation time or prioritizing the securing of the constraint compliance rate. Note that in the actual preventive control, the system-proposed value may be used as the screening parameter ε, or the user-set value may be used. In addition, it is also possible for the user to newly set the constraint screening parameter ε through an operation via the input unit 14 while referring to the system-proposed value.

<Effects>

According to the second embodiment, a system-proposed value for the constraint screening parameter ε is displayed based on a predetermined screening parameter determination preference. Because the constraint screening parameter ε is an important parameter that affects the screening of constraint conditions, the presentation of a system-proposed value can serve as a reference for the user when deciding on the constraint screening parameter ε.

<<Modifications>>

While the power system stabilization system 100 and the power system stabilization method according to the present disclosure have been described in each embodiment above, the disclosure is not limited to these descriptions, and various changes can be made.

For example, although the first embodiment described a case where all the processes of steps S101 to S107 in FIG. 9 are performed, the disclosure is not limited to this. That is, the process may be terminated at a predetermined step based on an operation of the input unit 14 (see FIG. 3) by a user. For example, the series of processes may be terminated at the stage where the constraint conditions are screened in step S104. Even in this case, it is possible, for example, to provide the screened constraint list DB 52 to an external party. The same can be said for the second embodiment.

In the first embodiment, a case was described where the processing unit 15 selects a constraint condition that includes a coefficient $a_{k,m,n}$ whose absolute value is less than or equal to the constraint screening parameter ε in step S1042 of FIG. 10, but the disclosure is not limited to this. For example, instead of the absolute value of the coefficient $a_{k,m,n}$, the square of the value of the coefficient $a_{k,m,n}$ may be used. That is, when each of a plurality of constraint conditions is represented by a polynomial, if, for all of the coefficients $a_{k,m,n}$ included in a predetermined polynomial, the square of the value of this coefficient $a_{k,m,n}$ is less than or equal to the constraint screening parameter ε, the processing unit 15 may be configured to screen the constraint condition represented by this polynomial.

The process of the power system stabilization system 100 (power system stabilization method) may also be executed as a predetermined program on a computer. The aforementioned program can be provided via a communication line, and can also be written to a recording medium such as a CD-ROM and distributed.

The present disclosure is not limited to each embodiment, and includes various modifications. For example, each embodiment has been described in detail to explain the present disclosure in an easy-to-understand manner, and is not necessarily limited to one that includes all the described configurations. It is also possible to replace a part of the configuration of one embodiment with the configuration of another embodiment, and it is also possible to add the configuration of another embodiment to the configuration of a certain embodiment. It is also possible to add, delete, or replace other configurations for a part of the configuration of each embodiment.

The various components, functions, processing units, processing means, and the like described above may be realized by hardware, for example, by designing a part or all of them with an integrated circuit. The various components, functions, and the like described above may also be realized by software by a processor interpreting and executing a program that realizes each function. Information such as programs, tables, and files for realizing each function can be stored in a memory, a recording device such as a hard disk or an SSD (Solid State Drive), or a recording medium such as an IC card, an SD card, or a DVD.

Control lines and information lines indicate those considered necessary for explanation and do not necessarily indicate all control lines and information lines on a product. In practice, it may be considered that almost all components are mutually connected.

**Reference Signs List**

| | |
|---|---|
| 10, 10A | Power system stabilization device |
| 11 | Program database |
| 12 | Database |
| 13 | Memory |
| 14 | Input unit |
| 15 | Processing unit |
| 16 | Display unit (Display device) |
| 17 | Communication unit |
| 18 | Bus |
| 20 | Measuring instrument |
| 30 | Control terminal |
| 41 | Power system model DB |
| 42 | Power system state DB |
| 43 | Event list DB |
| 44 | Constraint screening parameter DB |
| 45 | Cost function DB |
| 46 | Constraint condition construction unit (Processing unit) |
| 47 | Constraint screening unit (Processing unit) |
| 48 | Preventive control calculation unit (Processing unit) |
| 49 | Preventive control execution unit (Processing unit) |
| 51 | Constraint condition list DB |
| 52 | Screened constraint list DB |
| 53 | Preventive control DB |
| 54 | Preventive control evaluation result DB |
| 55 | Screening parameter determination preference DB |
| 56 | Constraint screening parameter management unit |
| 57 | Constraint screening parameter evaluation result DB |
| 100 | Power system stabilization system |
| B1, B2, B3, B4, B5, B6, B7, B8 | Bus |
| D1, D2, D3 | Load |
| G1, G2, G3 | Generator (Equipment) |
| GR1 | Power system |
| L1, L2, L3, L4, L5, L6, L7, L8, L9 | Transmission line |
| N1 | Communication network |

**Claims**

1.  A power system stabilization system, comprising:

    a processing unit configured to generate a constraint condition list which is a list of constraint conditions for performing preventive control on a power system, based on a power system model which is a model of the power system, a power system state which indicates a state of the power system, and an event list which is a list of events assumed in the power system,
    wherein the processing unit is configured to display, by a display device, information including a constraint screening parameter which serves as a criterion for whether to perform screening of the constraint conditions, and a screened constraint list which is a list of screened constraint conditions.

2.  The power system stabilization system according to claim 1, wherein

    a constraint condition indicates that, in a case where it is assumed that a predetermined event has occurred in the power system, transmitted power of each of transmission lines of the power system will be equal to or less than a value of a predetermined power flow constraint, and
    wherein the constraint condition is included in the constraint condition list.

**3.** The power system stabilization system according to claim 1, wherein
the processing unit, in a case where each of the constraint conditions is represented by a polynomial, is configured to screen a constraint condition represented by the polynomial when, for all of coefficients included in a predetermined one of polynomials, an absolute value of the coefficient or a square of the value of the coefficient is less than or equal to the constraint screening parameter.

**4.** The power system stabilization system according to claim 1, wherein
the processing unit is configured to re-enable a predetermined constraint condition, which is specified by a user's operation of an input unit, from among one or multiple constraint conditions screened from the constraint condition list when creating the screened constraint list.

**5.** The power system stabilization system according to claim 1, wherein

the processing unit is configured to calculate a control amount for performing the preventive control, based on the power system model, the power system state, the event list, the screened constraint list, and a predetermined cost function, and
wherein
the cost function is set to minimize an absolute value of a control amount of equipment included in the power system.

**6.** The power system stabilization system according to claim 1, wherein
the constraint condition list is created in a format which assigns a predetermined penalty in a case where the constraint conditions are not complied with.

**7.** The power system stabilization system according to claim 1, wherein
the processing unit is configured to display, by the display device, at least one of a calculation time for performing the preventive control and a constraint compliance rate which is a compliance rate of the constraint conditions.

**8.** The power system stabilization system according to claim 1, wherein
the processing unit is configured to display, by the display device, the number of the constraint conditions included in the constraint condition list and the number of constraint conditions included in the screened constraint list.

**9.** The power system stabilization system according to claim 1, wherein
the processing unit, for each constraint screening parameter of multiple constraint screening parameters of different magnitudes, is configured to display, by the display device, at least one of a calculation time for performing the preventive control when the each constraint screening parameter is used, and a constraint compliance rate which is a compliance rate of the constraint conditions.

**10.** The power system stabilization system according to claim 1, wherein
the processing unit is configured to calculate a proposed value of the constraint screening parameter based on a screening parameter determination preference which indicates a user's policy regarding a calculation time for performing the preventive control and a constraint compliance rate which is a compliance rate of the constraint conditions, and to display the proposed value by the display device.

**11.** A power system stabilization method, comprising:

a constraint condition list generation process of generating a constraint condition list which is a list of constraint conditions for performing preventive control on a power system, based on a power system model which is a model of the power system, a power system state which indicates a state of the power system, and an event list which is a list of events assumed in the power system; and
a display process of displaying, by a display device, information including a constraint screening parameter which serves as a criterion for whether to perform screening of the constraint conditions, and a screened constraint list which is a list of screened constraint conditions.

# FIG. 1

# FIG. 2A

# FIG. 2B

# FIG. 2C

# FIG. 3

POWER SYSTEM STABILIZATION SYSTEM ~100

POWER SYSTEM STABILIZATION DEVICE ~10

PROGRAM DATABASE ~11

INPUT UNIT ~14

PROCESSING UNIT ~15

DISPLAY UNIT ~16

DATABASE ~12

MEMORY ~13

18

COMMUNICA-TION UNIT ~17

COMMUNICATION NETWORK ~N1

MEASURING INSTRUMENT ~20

CONTROL TERMINAL 30

POWER SYSTEM

GR1

# FIG. 4

~10

## POWER SYSTEM STABILIZATION DEVICE

POWER SYSTEM STATE DB ~42

POWER SYSTEM MODEL DB ~41

EVENT LIST DB ~43

CONSTRAINT CONDITION CONSTRUCTION UNIT ~46

CONSTRAINT SCREENING PARAMETER DB ~44

CONSTRAINT SCREENING UNIT ~47

CONSTRAINT CONDITION LIST DB ~51

SCREENED CONSTRAINT LIST DB ~52

DISPLAY UNIT ~16

COST FUNCTION DB ~45

PREVENTIVE CONTROL CALCULATION UNIT ~48

PREVENTIVE CONTROL DB ~53

PREVENTIVE CONTROL EXECUTION UNIT ~49

PREVENTIVE CONTROL EVALUATION RESULT DB ~54

# FIG. 5

43

| EVENT ID | EVENT NAME | EVENT TYPE | EVENT DETAILS |
|---|---|---|---|
| AAA1 | TRANSMISSION LINE L1 FAULT | TRANSMISSION LINE FAULT | FAULT AND OPENING OF TRANSMISSION LINE L1 |
| ... | ... | ... | ... |

# FIG. 6

51

| CONSTRAINT CONDITION ID | CONSTRAINT NAME | CONSTRAINT FORMULA |
|---|---|---|
| BBB1 | CAPACITY OF TRANSMISSION LINE L2 DURING A FAULT ON TRANSMISSION LINE L1 | $[0.2 , 0 , \cdots, 0] \, x \leq 5MW$ |
| BBB2 | CAPACITY OF TRANSMISSION LINE L3 DURING A FAULT ON TRANSMISSION LINE L1 | $[0.2 , 0 , \cdots, 0] \, x \leq 5MW$ |
| ... | ... | ... |

# FIG. 7

53

| CONTROL ID | CONTROL TARGET | CONTROL AMOUNT |
|---|---|---|
| CCC1 | G1 | +10MW |
| CCC2 | G2 | −10MW |
| ... | ... | ... |

# FIG. 8

54

| EVALUATION RESULT ID | EVENT NAME | PRE-CONTROL MOST SEVERE OVERLOAD RATE | POST-CONTROL MOST SEVERE OVERLOAD RATE |
|---|---|---|---|
| DDD1 | TRANSMISSION LINE L1 FAULT | 125% | 90% |
| DDD2 | TRANSMISSION LINE L2 FAULT | 110% | 120% |
| . . . | . . . | . . . | . . . |

# FIG. 9

```
        ( START )
            │
            ▼
┌──────────────────────────┐
│  READ POWER SYSTEM MODEL, │ ～S101
│  POWER SYSTEM STATE, AND  │
│       EVENT LIST          │
└──────────────────────────┘
            │
            ▼
┌──────────────────────────┐
│   CONSTRUCT CONSTRAINT    │ ～S102
│      CONDITIONS           │
└──────────────────────────┘
            │
            ▼
┌──────────────────────────┐
│ READ CONSTRAINT SCREENING │ ～S103
│   PARAMETER AND THE LIKE  │
└──────────────────────────┘
            │
            ▼
┌──────────────────────────┐
│   SCREEN CONSTRAINT       │ ～S104
│      CONDITIONS           │
└──────────────────────────┘
            │
            ▼
┌──────────────────────────┐
│    READ COST FUNCTION     │ ～S105
└──────────────────────────┘
            │
            ▼
┌──────────────────────────┐
│   CALCULATE CONTROL       │ ～S106
│  AMOUNT AND THE LIKE FOR  │
│    PREVENTIVE CONTROL     │
└──────────────────────────┘
            │
            ▼
┌──────────────────────────┐
│   EXECUTE PREVENTIVE      │ ～S107
│       CONTROL             │
└──────────────────────────┘
            │
            ▼
         ( END )
```

# FIG. 10

```
                    ┌─────────────┐
                    │    START    │
                    └─────────────┘
                           │
                           ▼
        ┌──────────────────────────────┐
        │   IDENTIFY COEFFICIENTS       │ ～S1041
        │ SATISFYING PREDETERMINED      │
        │         CONDITION             │
        └──────────────────────────────┘
                           │
                           ▼
        ┌──────────────────────────────┐
        │     SELECT CONSTRAINT         │ ～S1042
        │   CONDITION INCLUDING         │
        │ COEFFICIENTS SATISFYING       │
        │ PREDETERMINED CONDITION       │
        └──────────────────────────────┘
                           │
                           ▼
                                           S1043
         ╱─────────────────────────╲
        ╱   HAVE ALL CONSTRAINT      ╲
        ╲   CONDITIONS BEEN          ╱  No
         ╲  CHECKED?                ╱
              │ Yes
```

HAVE ALL CONSTRAINT CONDITIONS BEEN CHECKED? — S1043 — No

DO ALL COEFFICIENTS RELATED TO CONSTRAINT CONDITION SATISFY PREDETERMINED CONDITION? — S1044 — No

Yes

SCREEN CONSTRAINT CONDITION — S1045

OUTPUT SCREENED CONSTRAINT CONDITIONS AND THE LIKE — S1046

END

# FIG. 11

52

| CONSTRAINT ID | CONSTRAINT CONDITION | STATE |
|---------------|----------------------|-------|
| EEE1 | L1_Cont1 | Enabled |
| EEE2 | L1_Cont2 | Disabled |
| …. | …. | …. |

# FIG. 12

☆ WITH SCREENING

○ WITHOUT SCREENING

# FIG. 13A

<WITHOUT SCREENING>

# FIG. 13B

<WITH SCREENING>

# FIG. 14

| OVERVIEW | NUMBER OF CONSTRAINT CONDITIONS |
|---|---|
| BEFORE SCREENING | 2500 |
| AFTER SCREENING | 1200 |

61a

| CONSTRAINT CONDITION | STATE |
|---|---|
| L1_Cont1 | Enabled |
| L1_Cont2 | Disabled |
| …. | …. |

52a

| CONTROL TARGET | CONTROL AMOUNT |
|---|---|
| G1 | +10MW |
| G2 | −10MW |
| …. | …. |

53a

| CONSTRAINT SCREENING PARAMETER | 4% |
|---|---|

44a

| CALCULATION TIME | 20 SECONDS |
|---|---|

| CONSTRAINT COMPLIANCE RATE | 99% |
|---|---|

EP 4 716 046 A1

# FIG. 15

~10A

## POWER SYSTEM STABILIZATION DEVICE

41 — POWER SYSTEM MODEL DB

42 — POWER SYSTEM STATE DB

43 — EVENT LIST DB

46 — CONSTRAINT CONDITION CONSTRUCTION UNIT

55 — SCREENING PARAMETER DETERMINATION PREFERENCE DB

56 — CONSTRAINT SCREENING PARAMETER MANAGEMENT UNIT

51 — CONSTRAINT CONDITION LIST DB

57 — CONSTRAINT SCREENING PARAMETER EVALUATION RESULT DB

16 — DISPLAY UNIT

44 — CONSTRAINT SCREENING PARAMETER DB

47 — CONSTRAINT SCREENING UNIT

52 — SCREENED CONSTRAINT LIST DB

45 — COST FUNCTION DB

48 — PREVENTIVE CONTROL CALCULATION UNIT

53 — PREVENTIVE CONTROL DB

49 — PREVENTIVE CONTROL EXECUTION UNIT

54 — PREVENTIVE CONTROL EVALUATION RESULT DB

# FIG. 16

57

| CONSTRAINT SCREENING PARAMETER [%] | CALCULATION TIME [s] | CONSTRAINT COMPLIANCE RATE [%] |
|---|---|---|
| 1% | 100 | 100 |
| 2% | 70 | 99.8 |
| . . . | . . . | . . . |

# FIG. 17

## INTERNATIONAL SEARCH REPORT

| International application No. |
|---|
| **PCT/JP2024/002884** |

### A. CLASSIFICATION OF SUBJECT MATTER

*H02J 3/00*(2006.01)i; *H02J 13/00*(2006.01)i
FI:   H02J3/00 170; H02J13/00 301J

According to International Patent Classification (IPC) or to both national classification and IPC

### B. FIELDS SEARCHED

Minimum documentation searched (classification system followed by classification symbols)

H02J3/00-5/00; H02J13/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

IEEE Xplore

### C. DOCUMENTS CONSIDERED TO BE RELEVANT

| Category* | Citation of document, with indication, where appropriate, of the relevant passages | Relevant to claim No. |
|---|---|---|
| A | WO 2019/150738 A1 (HITACHI, LTD.) 08 August 2019 (2019-08-08)<br>entire text, all drawings | 1-11 |
| A | JAHANBANI ARDAKANI, Ali et al. Prediction of Umbrella Constraints. 2018 Power Systems Computation Conference (PSCC), 2018.06, <DOI: 10.23919/PSCC.2018.8450586><br>entire text, all drawings | 1-11 |
| A | LIU, Shudi et al. Predicting Active Constraints Set in Security to Constrained Optimal Power Flow via Deep Neural Network, 2021 IEEE Power & Energy Society General Meeting (PESGM), 26 July 2021, <DOI: 10.1109/PESGM46819.2021.9637964><br>entire text, all drawings | 1-11 |
| A | 宮田 康志ほか, 電力系統特性キャッシュによるリアルタイム系統不安定化予兆分析システムの提案, 電気学会研究会資料, 11 October 2018 non-official translation (MIYATA, Kenji et al. Proposal of power system characteristic cache in real-time destabilization sign analysis system. IEEJ materials.)<br>entire text, all drawings | 1-11 |

[✓] Further documents are listed in the continuation of Box C.   [✓] See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 March 2024** | **09 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

# EP 4 716 046 A1

**INTERNATIONAL SEARCH REPORT**

International application No.

**PCT/JP2024/002884**

| C. | DOCUMENTS CONSIDERED TO BE RELEVANT | | |
|---|---|---|---|
| Category* | Citation of document, with indication, where appropriate, of the relevant passages | | Relevant to claim No. |
| A | 高澤 毅ほか, 大規模系統へのN-1条件付きOPF適用に関する検討, 電気学会論文誌B (電力・エネルギー部門誌), 31 March 2004, vol. 123, no. 5, p. 631-637, <DOI: 10.1541/ieejpes.123.631> (TAKAZAWA, Tsuyoshi. A Study of Application of OPF with N-1 Criterion to a Large Power System. IEEJ-B Journal (Electricity and Energy Journal.) entire text, all drawings | | 1-11 |

Form PCT/ISA/210 (second sheet) (July 2022)

36

## INTERNATIONAL SEARCH REPORT
### Information on patent family members

International application No.

**PCT/JP2024/002884**

| Patent document cited in search report | Publication date (day/month/year) | Patent family member(s) | Publication date (day/month/year) |
|---|---|---|---|
| WO 2019/150738 A1 | 08 August 2019 | JP 2019-135886 A<br>entire text, all drawings | |

Form PCT/ISA/210 (patent family annex) (July 2022)

**EP 4 716 046 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150378384 A1
- US 8775136 B2
- WO 2011112365 A1

**Non-patent literature cited in the description**

- **A.J. ARDAKANI** ; **F. BOUFFARD**. Identification of Umbrella Constraints in DC-Based Security-Constrained Optimal Power Flow. *IEEE Transactions on Power Systems*, November 2013, vol. 28 (4), 3924-3934
- **A.J. ARDAKANI** ; **F. BOUFFARD**. Acceleration of Umbrella Constraint Discovery in Generation Scheduling Problems. *IEEE Transactions on Power Systems*, July 2015, vol. 30 (4), 2100-2109